# EUROPEAN PATENT APPLICATION

(11) **EP 4 752 784 A1**
(43) Date of publication of application: **03.06.2026**
(21) Application number: 24216359.0
(22) Date of filing: 29.11.2024
(51) Int. Cl.: G06N 3/045

(54) **A METHOD FOR TRAINING AN AUTOMATED DRIVING SYSTEM (ADS) OF A VEHICLE**

(71) Applicant: Zenseact AB, 417 56 Gothenburg (SE)
(72) Inventor: JOHNANDER, Joakim, 587 37 Linköping (SE); VERBEKE, Willem, 412 60 Göteborg (SE); PETERSSON, Christoffer, 426 58 Västra Frölunda (SE)
(74) Representative: Zacco Sweden AB

(57) **Abstract**

It is provided a method (200) for training an Automated Driving System (ADS) (102) of a vehicle (100) by using a Central Processing Unit (CPU) (110) for handling input/output (I/O) operations associated with reading and writing sensor data from and to a disk (112), and the disk (112) for storing the sensor data , wherein the sensor data originates from sensors (114a-d), and a Graphics Processing Unit (GPU) (110) for training a neural network (104) of the ADS (102) using the sensor data provided to the GPU (108) via the CPU (110). The method comprises monitoring (202) a GPU utilization value, wherein the GPU utilization value pertains to a degree with which the GPU is currently occupied or to a degree with which the GPU will be occupied reflected by current queued data samples to be provided to the GPU. In case the GPU utilization value is above a GPU utilization threshold, the following steps are performed: reading (208) the sensor data from the disk (112) by using the CPU (110), transferring (210) the sensor data from the CPU (110) to the GPU (108), training (212) the neural network based on the sensor data by the GPU (108). In case the GPU utilization value is below the GPU utilization threshold, the following steps are performed: generating (214) synthetic sensor data by using the GPU (108), and training (216) the neural network (104) based on the synthetic sensor data by the GPU (108).

## Description

### TECHNICAL FIELD

The disclosed technology relates to methods and systems for training an automated driving system (ADS) of a vehicle. In particular, but not exclusively the disclosed technology relates to how to more efficiently balance the use of sensor data, captured by sensors of the vehicle, and synthetic sensor data generated by a Graphics Processing Unit (GPU) when training a neural network for the ADS..

### BACKGROUND

Most modern cars, as well as other types of vehicles, are equipped with an Automated Driving System (ADS), either in the form of Autonomous Driving (AD) designed to control and navigate the car without human supervision or Advanced Driver Assistance Systems (ADAS) designed to assist the driver in the driving process. The ADS is provided with sensor data from sensors provided on the car. These sensors may be provided in different parts of the vehicle, be of different types and be activated and used in different conditions. Typical sensors used in this context include cameras (image sensors), Light Detecting and Ranging (LiDAR) sensors and radar sensors.

The ADS often comprises a neural network. The training of such network is generally performed on a server, that is, in a data processing apparatus placed external to the vehicle. This server holds a GPU, a CPU and a disk. By conducting the training on the server, sensor data from a wide range of vehicles may easily be collected, thereby making a larger training data set available.

During the last couple of years, the number of sensors used for the ADS has increased with the effect that the amount of sensor data generated has increased. In addition, the sensors have developed into providing increased resolution, which also results in an increased amount of data. Even though more information is generally positive, it does have an effect of the ADS due to that additional CPU power is needed for handling the increased amount of sensor data. By way of example, the need for operations related reading and writing data from and to a disk, tasks normally performed by the CPU, increases as an effect of the increased amount of data. Thus, the increased amount of data has a larger effect on the CPU than the GPU, which as an effect may result in a non-optimal utilization of the GPU.

### SUMMARY

The herein disclosed technology seeks to mitigate, alleviate or eliminate one or more of the above-identified deficiencies and disadvantages in the prior art to address various problems relating to that, as an effect of that an increased amount of sensor data is generated, a CPU and/or a disk may not be able to provide sufficient data to a GPU when training a neural network with the effect that the GPU is not utilized to its full capacity.

Various aspects and embodiments of the disclosed technology are defined below and in the accompanying independent and dependent claims.

A first aspect of the disclosed technology comprises a method for training an Automated Driving System (ADS) of a vehicle by using a Central Processing Unit (CPU) for handling input/output (I/O) operations associated with reading and writing sensor data from and to a disk, the disk for storing the sensor data, wherein the sensor data originates from sensors, and a Graphics Processing Unit (GPU) for training a neural network of the ADS using the sensor data provided to the GPU via the CPU, said method comprising monitoring a GPU utilization value, wherein the GPU utilization value pertains to a degree with which the GPU is currently occupied or to a degree with which the GPU will be occupied reflected by current queued data samples to be provided to the GPU, in case the GPU utilization value is above a GPU utilization threshold, reading the sensor data from the disk by using the CPU, transferring the sensor data from the CPU to the GPU, training the neural network based on the sensor data by the GPU, in case the GPU utilization value is below the GPU utilization threshold, generating synthetic sensor data by using the GPU, and training the neural network based on the synthetic sensor data by the GPU.

A second aspect of the disclosed technology comprises an arrangement comprising a disk for storing the sensor data generated by sensors, wherein the sensor data reflects physical changes in a surrounding of a vehicle, a Central Processing Unit (CPU) for handling input/output (I/O) operations associated reading and writing sensor data to and from the disk, and a Graphics Processing Unit (GPU) for training a neural network of an ADS of the vehicle (100) using the sensor data provided to the GPU via the CPU, a control circuitry, communicatively connected to the disk, the CPU and the GPU, configured to monitor a GPU utilization value, and: in case the GPU utilization value is above a GPU threshold, read the sensor data from the disk by using the CPU, transfer the sensor data from the CPU to the GPU, train the neural network based on the sensor data by the GPU, in case the GPU utilization value is below the GPU threshold, generate synthetic sensor data by using the GPU, and train the neural network based on the synthetic sensor data by the GPU.

With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that by using the GPU as suggested above, the GPU may be utilized more efficiently, e.g. less idle time and having as many as possible of cores of the GPU used at full capacity. Further, a positive effect of having the GPU to generate synthetic sensor data during times when the CPU or the disk is not able to provide the sensor data is that it is made possible to have the GPU to generate synthetic sensor data that can complement the sensor data, i.e. data generated by the sensors of the vehicle. By doing so, in addition to training the neural network more time efficiently, the training may also cover edge cases, that is, sensor combinations less likely to occur in the sensor data generated by the sensors, with the positive effect that the neural network can be trained more broadly. In addition to generate the synthetic sensor data, other data may also be generated.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 illustrates an example of a vehicle provided with an ADS comprising a neural network as well as an external data processing apparatus arranged for training the neural network of the ADS.
Fig. 2 is a flowchart illustrating a method for training the neural network of the ADS of the vehicle.
Fig. 3 illustrates different components that may form part of the vehicle in further detail.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

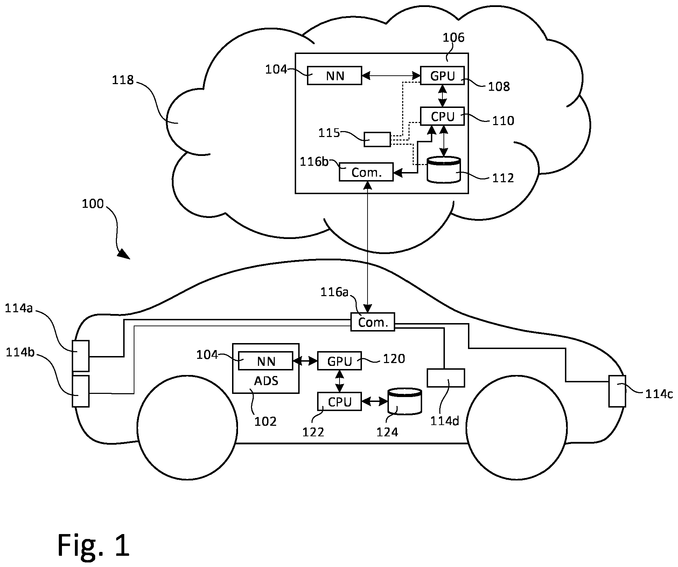

Fig. 1 generally illustrates a vehicle 100, in the form of a car, provided with an Automated Driving System (ADS) 102, which may be used to control and navigate the car without human supervision or to assist the driver in the driving process. The ADS 102 can comprise a neural network (NN) 104. As illustrated, the neural network 104 can be trained in an external data processing apparatus 118, e.g. a server placed outside the vehicle 100. By training the neural network 104 outside the vehicle 100, additional computational power may be provided and in addition, sensor data from several vehicles may be retrieved and taken into account during the training.

As illustrated, the training of the neural network 104 may be achieved by using an arrangement 106 comprising a Graphics Processing Unit (GPU) 108, a Central Processing Unit (CPU) 110 and a disk 112. A control circuitry 115 may be communicatively connected to these components. In addition to controlling an operation of these components, this circuitry may be arranged to monitor a GPU utilization value, a CPU utilization value and/or a disk utilization value. Even though not illustrated, multiple GPUs, multiple CPUs and/or multiple disks may be used.

The term "CPU" should in this context to be interpreted broadly as a device arranged for performing general purpose computing tasks, such as reading and writing data from and to the disk. The term "GPU" should be interpreted broadly as a device configured for handling large amounts of data in parallel, thereby making it suitable for training the neural network.

A communication unit 106a may be provided in the vehicle 100 and another communication unit 106b may be provided in the external data processing apparatus 118 such that the neural network 104 may be transferred from the external data processing apparatus 118 into the vehicle 100 once it has been trained. As illustrated, an in-vehicle GPU 120, an in-vehicle CPU 122 and an in-vehicle disk 124 may be provided in the vehicle 100. Since less computational power is needed during inference, the in-vehicle GPU 120 may have less computational power compared to the GPU of the external data processing apparatus used during training.

An advantage of having the neural network trained at the external data processing apparatus 118, as illustrated in fig. 1, is that GPUs having increased computational power can be used. If using high resolution sensors, that is, sensors arranged to produce a vast amount of sensor data, the risks for CPU bound and IO bound increase. To train the neural network it is namely most often required to have the sensor data loaded from the disk and decoded on the CPU before being transferred to the GPU for a forward and backward pass through the neural network. In cases when on-board evaluation is used, it is common to use small neural networks, that is, neural networks having e.g. fewer layers, smaller number of neurons per layer, fewer parameters, a more shallow architecture etc. compared to neural networks typically run on a server. By having such small networks, memory and computational requirements can be lowered. Thus, when training such small networks in combination with vast amounts of sensor data, the CPU bound and the IO bound may become more prominent.

If having the data loading and the neural network operation run asynchronously, i.e. having the CPU preparing a next data sample while the GPU is running the neural network, the IO bound and the CPU bound may result in that the GPU is idle, or in other ways not fully utilised, on a frequent basis. To more efficiently use the GPU, or the GPUs, this idle time may be used for generating the synthetic sensor data.

Being able to identify the CPU bound and the IO bound is relevant during training of the neural network 104. In case there is neither a CPU bound nor an IO bound, the neural network can be trained using the sensor data captured by sensors of vehicles, such as the sensors 114a-d of the vehicle. On the other hand, in case the GPU is idle due CPU bound or IO bound, the GPU can be arranged to generate synthetic sensor data and be trained on this synthetic sensor data. By way of example, the synthetic sensor data can be generated using scene flow estimation which may be based on Neural Radiance Fields (NeRF), Gaussian splatting, diffusions models or General Adversarial Networks (GANs). In addition to being able to use the GPU more efficiently, i.e. reducing its idle time, the synthetic sensor data may be generated such that gaps are filled. NeRFs can also be generated without using scene flow estimation. In general terms, sensor data combinations insufficiently covered by the training data generated by the sensor data, herein referred to as gaps, may be determined, and once these gaps are determined, gaps analysis data, i.e. information about gaps in the training data, can be used as input when determining which sensor data combinations the synthetic sensor data is to cover. Situations most often not sufficiently covered are sensor combinations linked to traffic law violations, e.g. sensor combinations related to having the car driving against the traffic on a one-way street. Another type of situation, related to a traffic law violation not committed by the driver of the car, which may herein be both a human driver and a non-human driver, is having a pedestrian jumping out in front of the car in an unexpected manner. These edge cases, sometimes referred to as outlier cases, may be taken into account by directing the generation of the synthetic sensor data such that these edge cases are covered.

Since the CPU bound and the IO bound mentioned above, that is, having the GPU restricted due to limitations related to the CPU or limitations related to the disk, may indirectly be identified by monitoring a utilization of the GPU, it is possible to determine whether to train the neural network based on the sensor data or the synthetic sensor data by monitoring a GPU utilization value. In case the GPU utilization value is above a GPU utilization threshold, the sensor data may be used for training the neural network. Put differently, in case the GPU is occupied, it can be concluded that the CPU or the disk does not restrict the GPU. In case the GPU utilization value is below the GPU utilization threshold, herein also referred to as GPU threshold, it may however be concluded that the GPU is not fully utilized and that this is therefore limited by the CPU and/or the disk. As an alternative to having the CPU utilization value pertaining to a degree with which the GPU is currently occupied, this value may pertain to a degree with which the GPU will be occupied reflected by current queued data samples to be provided to the GPU, i.e. the data samples to be loaded into the GPU.

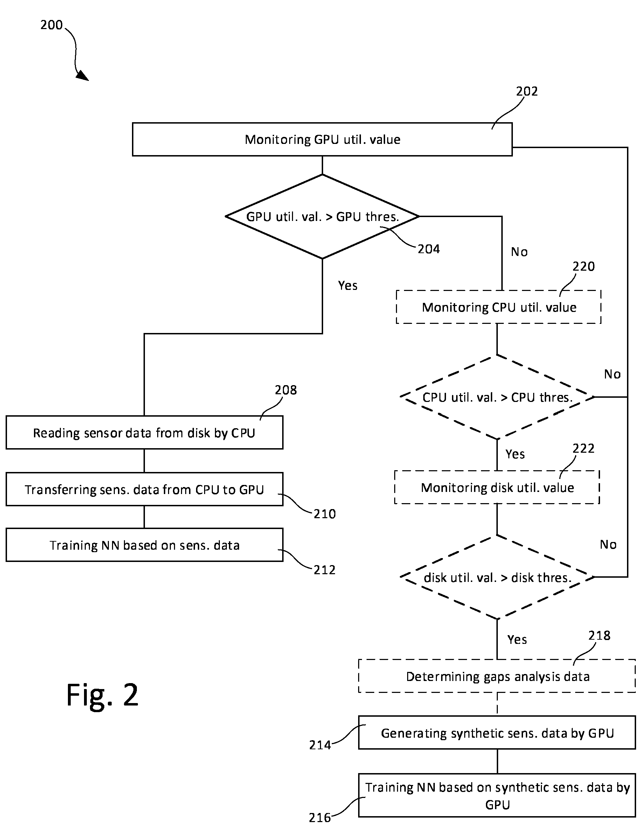

As further discussed below with reference to fig. 2, to increase reliability and to avoid that the GPU utilization value being below the GPU utilization threshold is a result of something else than that the CPU is restricting the GPU, a CPU utilization value may also be monitored and compared with a CPU utilization threshold, herein also referred to as CPU threshold. By adding this extra step, the synthetic sensor data is generated if both GPU utilization value is below the GPU utilization threshold and the CPU utilization value is above the CPU utilization threshold. In a similar manner, a disk utilization value may be monitored and compared with a disk utilization threshold, herein also referred to as disk threshold. By adding such extra step, the synthetic sensor data is generated if both GPU utilization value is below the GPU utilization threshold and the disk utilization value is above the disk utilization threshold.

The GPU utilization value may reflect a degree with which the GPU is currently occupied, but it may also reflect a future utilization of the GPU, or put differently, a foreseeable utilization value of the GPU. Such future utilization of the GPU may be determined, or predicted, by taking into account current queued data samples to be provided to the GPU. As an effect of considering the future utilization of the GPU, the GPU threshold may be set to be above 100% of a capacity of the GPU.The term "sensor data" used herein should be understood to encompass data originating from the sensors of vehicles, e.g. point clouds from LiDAR sensors or image data from cameras. The term "synthetic sensor data" used herein should, as the name suggest, be understood to encompass data being in the same format as the sensor data, but generated by a data processing model. For instance, the synthetic sensor data may be generated indirectly by using a Structure for Motion (SfM) model or a generative AI model. In addition, the synthetic sensor data may be generated by using Neural Radiance Fields (NeRFs) or Gaussian splatting. The sensor data may be retrieved from sensors provided in multiple vehicles collected over time in various conditions.

The approach suggested above is not limited to one GPU, but also multiple GPUs may be used. In the same manner, multiple disks and multiple CPUs may be used.

Fig. 2 is a flowchart illustrating a method 200 for training for the neural network of the ADS. In line with the description above and as illustrated in fig. 1, this training data can involve the CPU for handling input/output (I/O) operations associated with reading and writing the sensor data from and to the disk, the disk for storing the sensor data, and the GPU for training the neural network of the ADS using the sensor data provided to the GPU via the CPU.

The method can comprise monitoring 202 the GPU utilization value, wherein the GPU utilization value pertains to a degree with which the GPU is currently occupied or to a degree with which the GPU will be occupied reflected by current queued data samples to be provided to the GPU as described above. In case the GPU utilization value is above a GPU utilization threshold, the following steps may be performed: reading 208 the sensor data from the disk 112 by using the CPU 110, transferring 210 the sensor data from the CPU 110 to the GPU 108, and training 212 the neural network based on the sensor data by the GPU 108. Put differently, the GPU is not restricted by the CPU or the disk, and for that reason the sensor data may be retrieved from the disk via the CPU to the GPU. On the other hand, in case the GPU utilization value is below the GPU utilization threshold, the following steps may be performed: generating 214 the synthetic sensor data by using the GPU 108, and training 216 the neural network based on the synthetic sesnsor data by the GPU 108. Put differently, if there is spare capacity to utilize in the GPU, the synthetic sensor data can be generated.

Further, to provide for that the synthetic sensor data generated can fill the gaps, as described above, the method may comprise determining 218 gaps analysis data, wherein the gaps analysis data may provide information about sensor combinations not sufficiently covered by the sensor data as it currently stands. By way of example, the edge cases described above may constitute such sensor combinations.

As described above, the method 200 may further comprise monitoring 220 the CPU utilization value. By monitoring the CPU utilization value, the CPU bound can be determined both implicitly by using the GPU utilization value and explicitly by using the CPU utilization value. By combining the two, a more reliable assessment of whether or not the CPU bound is present can be achieved. Thus, as illustrated, in case the GPU utilization value is below the GPU threshold, and in case the CPU utilization value is above the CPU threshold, the steps of generating 214 the synthetic sensor data, and training 216 the neural netwok based on the synthetic sensor data may be performed. Further, in the same manner as the IO bound can be determined implicitly by monitoring the GPU utilization value, this can also be determined explicitly by monitoring 222 the disk utilization value. To provide a more reliable assessment of the IO bound, the steps of generating 214 the synthetic sensor data and training 216 the neural network based on the synthetic sensor data can be performed if the GPU utilization value is below the GPU threshold, and if the disk utilization value is above the disk threshold.

The CPU threshold may be a CPU capacity limit, i.e. maximum utilization. It is also possible to have the CPU threshold set to be above the CPU capacity limit, i.e. above maximum utilization. In this latter case, e.g. if the CPU capacity threshold is set to be 110% of the CPU capacity limit, the CPU will act as a bottleneck and there will be a CPU bound, but to a degree that may be acceptable. Put differently, the CPU threshold may be set such that the CPU bound is not completely avoided, but set such that the effects of such CPU bound is within acceptable levels.

An effect of having the synthetic sensor data generated by the GPU is that the synthetic sensor data may be dynamically generated and processed in-memory during training, thereby avoiding steps involving having the sensor data written to and read from the disk. By way of example, the data may be stored in volatile memory, such as RAM, and not non-volatile memory, such as the disk.

The method 200 is preferably a computer-implemented method 200, performed by an external data processing apparatus 118 as illustrated in fig. 1e. The processing system may for example comprise one or more processors and one or more memories coupled to the one or more processors, wherein the one or more memories store one or more programs that perform the steps, services and functions of the method 200 disclosed herein when executed by the one or more processors.

Executable instructions for performing these functions are, optionally, included in a non-transitory computer-readable storage medium or other computer program product configured for execution by one or more processors.

Referring back to fig. 1, these are schematic block diagram representations of the arrangement 106. The arrangement 106 can comprise control circuitry (e.g. one or more processors) configured to perform the functions of the method 200 disclosed herein, where the functions may be included in a non-transitory computer-readable storage medium or other computer program product configured for execution by the control circuitry. In other words, the arrangement 106 comprises one or more memory storage areas comprising program code, the one or more memory storage areas and the program code configured to, with the one or more processors, cause the arrangement 106 to perform the method 200 according to any one of the embodiments disclosed herein.

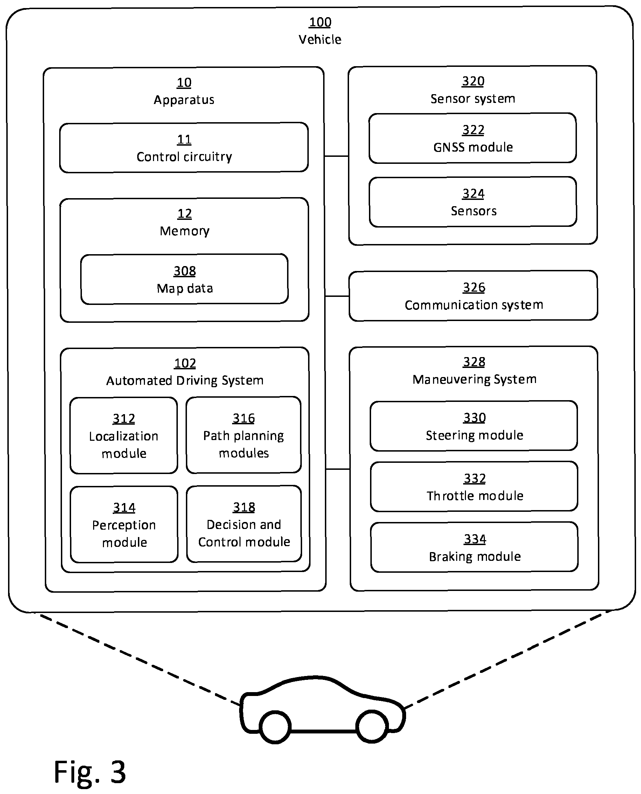

Fig. 3 is a schematic more detailed illustration of the ADS-equipped vehicle 100 illustrated in fig. 1. As used herein, a "vehicle" is any form of motorized transport. For example, the vehicle 100 may be any road vehicle such as a car (as illustrated herein), a motorcycle, a (cargo) truck, a bus, etc.

An apparatus 10 can comprise control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 100 (e.g. the ADS 102). Moreover, the apparatus 10 may form a part of the ADS 102, i.e. the apparatus 10 may be implemented as a module or feature of the ADS. The control circuitry 11 may comprise one or more processors, such as the CPU, the GPU and the disk, microcontroller, or microprocessor. The one or more processors may be configured to execute program code stored in the memory 12, in order to carry out various functions and operations of the vehicle 100 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 102 of the vehicle 100 in order to perform autonomous functions of the vehicle 100. The map data 308 may comprise high-definition (HD) map data. It is contemplated that the memory 12, even though illustrated as a separate element from the ADS 102, may be provided as an integral element of the ADS 102. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 102 or any other system of the vehicle 100. In other words, according to an exemplary embodiment, any distributed or local control circuitry device may be utilized in the realization of the present inventive concept. The ADS 102 is configured carry out the functions and operations of the autonomous or semi-autonomous functions of the vehicle 100. The ADS 102 can comprise a number of modules, where each module is tasked with different functions of the ADS 102.

The vehicle 100 comprises a number of elements which can be commonly found in autonomous or semi-autonomous vehicles. It will be understood that the vehicle 100 can have any combination of the various elements shown in Fig. 3. Moreover, the vehicle 100 may comprise further elements than those shown in Fig. 3. While the various elements is herein shown as located inside the vehicle 100, one or more of the elements can be located externally to the vehicle 100. For example, the map data may be stored in a remote server and accessed by the various components of the vehicle 100 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 100 of Fig. 3 should be seen merely as an illustrative example, as the elements of the vehicle 100 can be realized in several different ways.

The vehicle 100 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 100. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 100.

The vehicle 100 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 100 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 100 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 100 further comprises a maneuvering system 328. The maneuvering system 328 is configured to control the maneuvering of the vehicle 100. The maneuvering system 328 comprises a steering module 330 configured to control the heading of the vehicle 100. The maneuvering system 328 further comprises a throttle module 332 configured to control actuation of the throttle of the vehicle 100. The maneuvering system 328 further comprises a braking module 334 configured to control actuation of the brakes of the vehicle 100. The various modules of the maneuvering system 328 may also receive manual input from a driver of the vehicle 100 (i.e. from a steering wheel, a gas pedal and a brake pedal respectively). However, the maneuvering system 328 may be communicatively connected to the ADS 102 of the vehicle, to receive instructions on how the various modules of the maneuvering system 328 should act. Thus, the ADS 102 can control the maneuvering of the vehicle 100, for example via the decision and control module 318.

The ADS 102 may comprise a localization module 312 or localization block/system. The localization module 312 is configured to determine and/or monitor a geographical position and heading of the vehicle 100, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 102 may further comprise a perception module 314 or perception block/system 314. The perception module 314 may refer to any commonly known module and/or functionality, e.g. comprised in one or more electronic control modules and/or nodes of the vehicle 100, adapted and/or configured to interpret sensory data - relevant for driving of the vehicle 100 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) of the control circuitry 11 (associated with the arrangement 106) may be or include any number of hardware components for conducting data or signal processing or for executing computer code stored in memory 12. The arrangement 106 may have an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

Accordingly, it should be understood that parts of the described solution may be implemented either in the vehicle 100, in a system located external the vehicle 100, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent claims should be apparent for the person skilled in the art.

### ADS definition

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an ADS aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

### Surrounding environment

The surrounding environment of the ego-vehicle can be understood as a general area around the ego-vehicle in which objects (such as other vehicles, landmarks, obstacles, etc.) can be detected and identified by vehicle sensors (radar, LIDAR, cameras, etc.), i.e. within a sensor range of the ego-vehicle.

### If-terminology

As used herein, the term "if" or "in case" may be construed to mean "when or "upon" or "in response to" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context. Accordingly, the phrase "if X equals Y" may be construed as "when X equals Y", "when it is determined that X equals Y", "in response to X being equal to Y", or "in response to detecting/determining that X equals Y" depending on the context.

### Sensor Device

In the present context, a "sensor device" or "sensor" refers to a specialized component or system that is designed to capture and gather information from the vehicle's surroundings. These sensors play a crucial role in enabling the ADS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in autonomous driving include LiDAR (Light Detection and Ranging), Radar, Cameras, Inertial Measurement Units (IMUs) and Ultrasonic sensors. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

## Claims

1. A method (200) for training an Automated Driving System (ADS) (102) of a vehicle (100) by using
a Central Processing Unit (CPU) (110) for handling input/output (I/O) operations associated with reading and writing sensor data from and to a disk (112),
the disk (112) for storing the sensor data, wherein the sensor data originates from sensors (114a-d), and
a Graphics Processing Unit (GPU) (110) for training a neural network (104) of the ADS (102) using the sensor data provided to the GPU (108) via the CPU (110),
said method comprising
monitoring (202) a GPU utilization value, wherein the GPU utilization value pertains to a degree with which the GPU is currently occupied or to a degree with which the GPU will be occupied reflected by current queued data samples to be provided to the GPU,
in case the GPU utilization value is above a GPU utilization threshold,
reading (208) the sensor data from the disk (112) by using the CPU (110),
transferring (210) the sensor data from the CPU (110) to the GPU (108),
training (212) the neural network (104) based on the sensor data by the GPU (108),
in case the GPU utilization value is below the GPU utilization threshold,
generating (214) synthetic sensor data by using the GPU (108), and
training (216) the neural network (104) based on the synthetic sensor data by the GPU (108).

2. The method according to claim 1, wherein the synthetic sensor data is dynamically generated and processed in-memory during training, thereby avoiding steps involving having the sensor data written to and read from the disk (112).

3. The method according to any one of the preceding claims, wherein the method further comprises
monitoring (220) a CPU utilization value, wherein the CPU utilization value pertains to a degree with which the CPU is occupied with decoding the sensor data retrieved from the disk (112),
in case the GPU utilization value is below the GPU threshold, and the CPU utilization value is above a CPU threshold,
performing the steps of generating (214) synthetic sensor data by using the GPU (108), and training (216) the neural network (114) based on the synthetic sensor data by the GPU (108).

4. The method according to any one of the preceding claims, wherein the method further comprises
monitoring (222) a disk utilization value, wherein the disk utilization value pertains to a degree with which the disk is occupied with writing and reading the sensor data,
in case the GPU utilization value is below a GPU threshold, and the disk utilization value is above a disk threshold,
performing the steps of generating (214) synthetic sensor data by using the GPU (108),
and training (216) the neural network (114) based on the synthetic sensor data by the GPU (108).

5. The method according to any one of the preceding claims, wherein the GPU (108), the CPU (110) and the disk (112) are placed in the external processing apparatus (118), and wherein the neural network (114), once trained, is provided to the ADS (102) of the vehicle.

6. The method according to any one of the preceding claims, further comprising
in the case the GPU utilization value is below the GPU threshold,
determining (218) gaps analysis data representing sensor data combinations insufficiently covered by the training data generated based on the sensor data,
wherein the synthetic sensor data is generated based on the gaps analysis data by the GPU.

7. The method according to claim 6, wherein the sensor data combinations are related to situations in which a driver of the vehicle (100) or other road users are committing a traffic law violation.

8. The method according to any one of the preceding claims, wherein the synthetic sensor data is image data, and the synthetic sensor data is generated by using scene flow estimation by the GPU.

9. The method according to claim 8, wherein the synthetic sensor data is generated by using the scene flow estimation by the GPU, wherein the scene flow estimation is a function of gaps analysis data.

10. The method according to claim 8 or 9, wherein the scene flow estimation is based on Neural Radiance Fields (NeRF), Gaussian splatting, diffusions models, or General Adversarial Networks (GANs).

11. The method according to any one of the preceding claims, wherein the sensors (114a-d) comprise one or more of the following types: Light Detection and Ranging (LiDAR) sensors, Radio Detection and Ranging (Radar) sensors, ultrasonic sensors, Inertial Measurement Units (IMUs), and image sensors.

12. The method according to any one of the preceding claims, wherein the neural network is placed in the vehicle and forms part of an Automated Driving System (ADS) configured for controlling and operating the vehicle without direct human intervention.

13. An arrangement (106) comprising
a disk (112) for storing the sensor data generated by sensors (114a-d), wherein the sensor data reflects physical changes in a surrounding of a vehicle (100),
a Central Processing Unit (CPU) (110) for handling input/output (I/O) operations associated reading and writing sensor data to and from the disk (112), and
a Graphics Processing Unit (GPU) (108) for training a neural network (104) of an ADS (102) of the vehicle (100) using the sensor data provided to the GPU (108) via the CPU (110),
a control circuitry, communicatively connected to the disk, the CPU and the GPU, configured to monitor a GPU utilization value, and:
in case the GPU utilization value is above a GPU threshold,
read the sensor data from the disk (112) by using the CPU (110),
transfer the sensor data from the CPU (110) to the GPU (108),
train the neural network (104) based on the sensor data by the GPU (108),
in case the GPU utilization value is below the GPU threshold,
generate synthetic sensor data by using the GPU (108), and
train the neural network (104) based on the synthetic sensor data by the GPU (108).

14. The arrangement (106) according to claim 13, wherein the sensors (114a-d) comprise one or more of the following types: Light Detection and Ranging (LiDAR) sensors, Radio Detection and Ranging (Radar) sensors, ultrasonic sensors, Inertial Measurement Units (IMUs) and image sensors.

15. A computer program product, loadable in a memory of a processing unit and comprising instructions suitable for performing the steps of the method according to any one of the claims 1 to 12.
